# EUROPEAN PATENT SPECIFICATION

(11) **EP 3 771 574 B1**
(45) Date of publication and mention of the grant of the patent: **27.12.2023**
(21) Application number: 20188098.6
(22) Date of filing: 28.07.2020
(51) Int. Cl.: B60C 11/13, B60C 11/03

(54) **HEAVY DUTY PNEUMATIC TIRE**
SCHWERLASTLUFTREIFEN
PNEUMATIQUE POUR SERVICE INTENSE

(30) Priority: 30.07.2019 JP 2019139402
(43) Date of publication of application: 03.02.2021
(73) Proprietor: Sumitomo Rubber Industries, Ltd., Kobe-shi, Hyogo-ken 651-0072 (JP)
(72) Inventor: TANADA, Kenichiro, Kobe-shi, Hyogo 651-0072 (JP); YOSHINO, Masayuki, Kobe-shi, Hyogo 651-0072 (JP)
(74) Representative: Manitz Finsterwald Patent- und Rechtsanwaltspartnerschaft mbB

(56) References cited:
- EP-A1- 0 413 502
- EP-B1- 2 614 966
- DE-A1-102015 225 417
- JP-A- H11 180 112

## Description

### BACKGROUND OF THE INVENTION

### Field of the Invention

The present invention relates to a heavy duty pneumatic tire.

### Description of the Background Art

On the tread of a heavy duty pneumatic tire to be mounted to a vehicle such as a truck and a bus, circumferential grooves extending in the circumferential direction are formed in consideration of running on a wet road surface. The circumferential grooves define land portions in the tread.

In a running state, when the air in the circumferential grooves causes air column resonance, air column resonance sound is generated. The circumferential grooves can also be a cause of occurrence of road noise based on air column resonance sound. To improve the quietness of tires, various examinations have been conducted for technology to inhibit occurrence of air column resonance sound (for example JP H11-105511 A).

For example, air column resonance sound can be reduced when the volumes of the circumferential grooves are reduced. However, circumferential grooves formed with small volumes reduce the wet performance of a tire.

Lateral grooves that divide a land portion into blocks aligned in the circumferential direction contribute to improvement of wet performance. However, air column resonance sound is amplified by the air flowing from the lateral grooves into the circumferential grooves.

It is difficult to balance wet performance and quietness. Establishment of a technology capable of improving quietness while inhibiting a reduction in wet performance is required.

Stones are scattered on a road surface. Thus, stones may be trapped into grooves provided on a tire. In particular, in a tire provided with lateral grooves connected to circumferential grooves in order to improve wet performance, stones are likely to be trapped at the positions where the lateral grooves and the circumferential grooves are connected. If the volumes of the circumferential grooves are reduced, stone trapping is inhibited. However, in this case, wet performance is reduced.

EP 2 614 966 A1, EP 0 413 502 A1 and JP H11-180112 A disclose heavy duty pneumatic tires having a tread surface with blocks formed on the tread surface. The blocks are separated by grooves in which protrusions protruding from the groove bottom are formed.

The present invention has been made in consideration of these circumstances, and an object of the present invention is to provide a heavy duty pneumatic tire having improved quietness while inhibiting a reduction in wet performance. Another object of the present invention is to provide a heavy duty pneumatic tire having improved anti-stone trapping performance while inhibiting a reduction in wet performance.

### SUMMARY OF THE INVENTION

A heavy duty pneumatic tire according to the present invention includes a tread that comes into contact with a road surface. The tread includes at least three land portions extending in a circumferential direction, and a circumferential groove is present between one land portion and another land portion located adjacent to the one land portion. The land portion includes a large number of blocks aligned in the circumferential direction, and a lateral groove is present between one block and another block located adjacent to the one block. The circumferential groove includes a large number of projections projecting from a bottom surface of the circumferential groove, and the projections include first projections and second projections having volumes smaller than those of the first projections. The lateral groove is connected to the circumferential groove, and each first projection is located at a position where the lateral groove is connected to the circumferential groove. In the circumferential direction, an opening of the lateral groove is located between an end of the first projection and another end of the first projection. The first projections are taller than the second projections.

Preferably, in the heavy duty pneumatic tire, the circumferential groove is a zigzag circumferential groove extending in a zigzag manner.

Preferably, in the heavy duty pneumatic tire, the lateral groove is connected to the zigzag circumferential groove at an outer side of bending of the zigzag circumferential groove.

Preferably, in the heavy duty pneumatic tire, the first projections bend in a direction that is the same as a direction in which the zigzag circumferential groove bends.

Preferably, in the heavy duty pneumatic tire, the first projections are longer than the second projections.

Preferably, in the heavy duty pneumatic tire, the first projections and the second projections are alternately arranged in the circumferential groove.

Preferably, in the heavy duty pneumatic tire, a depth from an outer surface of the tread to each first projection is smaller than a depth of the lateral groove.

In the heavy duty pneumatic tire according to the present invention, quietness is improved while a reduction in wet performance is inhibited. In addition, in the heavy duty pneumatic tire according to the present invention, anti-stone trapping performance is improved while a reduction in wet performance is inhibited.

### BRIEF DESCRIPTION OF THE DRAWINGS

FIG. 1 is a development of a part of a tread of a heavy duty pneumatic tire according to an embodiment of the present invention;
FIG. 2 illustrates cross-sectional views each showing a cross-section of a groove formed on the tread;
FIG. 3 is a plan view showing a projection provided in a circumferential groove; and
FIGS. 4 illustrates cross-sectional views each showing a cross-section of the projection.

### DESCRIPTION OF THE PREFERRED EMBODIMENTS

Hereinafter, the present invention will be described in detail based on preferred embodiments with appropriate reference to the drawings.

In the present invention, a state where: a tire is mounted on a normal rim; the internal pressure of the tire is adjusted to a normal internal pressure; and no load is applied to the tire, is referred to as a normal state. In the present invention, unless otherwise specified, the dimensions and angles of the components of the tire are measured in the normal state.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

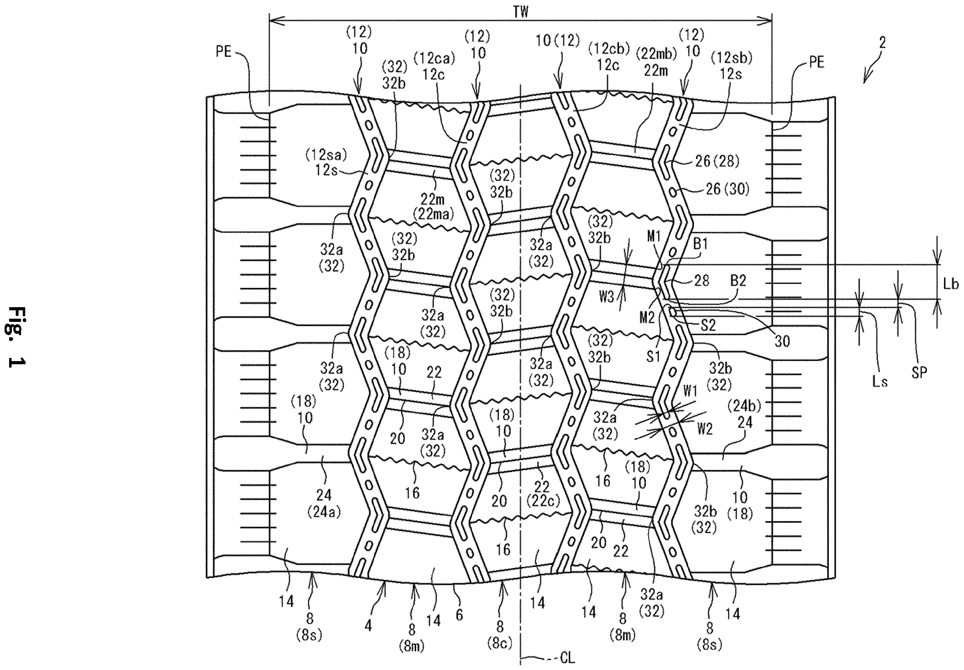

FIG. 1 shows a part of a heavy duty pneumatic tire 2 (hereinafter, sometimes simply referred to as "tire 2") according to one embodiment of the present invention. The tire 2 is mounted to a vehicle such as a truck and a bus.

In FIG. 1, the up-down direction is the circumferential direction of the tire 2, and the right-left direction is the axial direction of the tire 2. The direction perpendicular to the surface of the sheet of FIG. 1 is the radial direction of the tire 2. In FIG. 1, an alternate long and short dash line CL represents the equator plane of the tire 2.

The tire 2 includes a tread 4 that comes into contact with a road surface. The tread 4 comes into contact with a road surface at the outer surface thereof, that is, a tread surface 6. The tread 4 is formed from a crosslinked rubber.

In addition to the tread 4, the tire 2 includes components, such as sidewalls, beads, a carcass, and a belt, which are not shown. Although not described in detail, the specifications of the components of the tire 2 except for a tread pattern are the same as those of components generally used in heavy duty pneumatic tires.

In FIG. 1, reference character PE indicates each end of the tread surface 6. In the tire 2, if each end PE of the tread surface 6 is indistinguishable from the appearance, each outer end in the axial direction of a ground-contact surface obtained by applying the normal load to the tire 2 in the normal state and bringing the tread 4 into contact with a flat surface at a camber angle of 0° is defined as an end PE of the tread surface 6.

In FIG. 1, a double-headed arrow TW represents the width of the tread surface 6. The width TW (hereinafter, tread surface width TW) of the tread surface 6 is represented as the distance, from one end PE of the tread surface 6 to the other end PE of the tread surface 6, measured along the tread surface 6.

In the tire 2, the tread 4 includes at least three land portions 8 extending in the circumferential direction. These land portions 8 extend in the circumferential direction. These land portions 8 are aligned in the axial direction. The tread 4 shown in FIG. 1 includes five land portions 8.

Among the five land portions 8, the land portion 8 located at the inner side in the axial direction, that is, the land portion 8 located on the equator plane CL, is a center land portion 8c. The land portions 8 located at the outermost sides in the axial direction, that is, the land portions 8 including the ends PE of the tread surface 6, are shoulder land portions 8s. Furthermore, the land portions 8 located between the center land portion 8c and the shoulder land portions 8s are middle land portions 8m. The tread 4 includes the center land portion 8c, a pair of the middle land portions 8m, and a pair of the shoulder land portions 8s. In the case where the land portion located at the inner side in the axial direction, among the land portions 8 formed in the tread 4, is located not on the equator plane CL but near the equator plane CL, the land portion located near the equator plane CL is defined as a center land portion.

In the tire 2, a groove 10 is present between one land portion 8 and another land portion 8 located adjacent to the one land portion 8. The groove 10 continuously extends in the circumferential direction. The groove 10 is also referred to as a circumferential groove 12. The tread 4 includes at least three land portions 8 extending in the circumferential direction, and a circumferential groove 12 is present between one land portion 8 and a land portion 8 located adjacent to the one land portion 8. On the tread 4 shown in FIG. 1, four circumferential grooves 12 are formed. These circumferential grooves 12 are aligned in the axial direction. The circumferential grooves 12 guide a water film present between the tread 4 and a road surface. The circumferential grooves 12 contribute to wet performance.

Among the four circumferential grooves 12, the circumferential grooves 12 located at the inner side in the axial direction, that is, the circumferential grooves 12 near the equator plane CL, are center circumferential grooves 12c. The circumferential grooves 12 located at the outermost sides in the axial direction, that is, the circumferential grooves 12 near the ends PE of the tread surface 6, are shoulder circumferential grooves 12s. On the tread 4, a pair of the center circumferential grooves 12c and a pair of the shoulder circumferential grooves 12s are formed. In the case where the circumferential grooves 12 formed on the tread 4 include a circumferential groove located on the equator plane CL, the circumferential groove located on the equator plane CL is defined as a center circumferential groove. Furthermore, in the case where a circumferential groove is present between each center circumferential groove 12c and each shoulder circumferential groove 12s, the circumferential groove is defined as a middle circumferential groove.

In the tire 2, from the viewpoint of contribution to drainage performance and traction performance, the width of each circumferential groove 12 is preferably about 2 to 10% of the tread surface width TW. The depth of each circumferential groove 12 is preferably 10 to 25 mm.

In the tire 2, among the land portions 8 formed in the tread 4, at least one land portion 8 includes a large number of blocks 14 aligned in the circumferential direction.

As shown in FIG. 1, in the tire 2, each of all the land portions 8 forming the tread 4 includes a large number of blocks 14. A large number of blocks 14 may be formed only in the center land portion 8c, a large number of blocks 14 may be formed only in each middle land portion 8m, or a large number of blocks 14 may be formed only in each shoulder land portion 8s. A large number of blocks 14 may be formed only in each of the center land portion 8c and the middle land portions 8m, a large number of blocks 14 may be formed only in each of the center land portion 8c and the shoulder land portions 8s, or a large number of blocks 14 may be formed only in each of the middle land portions 8m and the shoulder land portions 8s. The land portions 8 in which blocks 14 are to be formed are determined as appropriate in consideration of the specifications of the tire 2, etc.

In the tire 2, from the viewpoint of ensuring flexibility of the tread 4, sipes 16 can be provided on the land portions 8. As shown in FIG. 1, in the tire 2, sipes 16 are provided on the blocks 14 formed in the center land portion 8c and the middle land portions 8m.

In the tire 2, a groove 10 is present between one block 14 and another block 14 located adjacent to the one block 14. The groove 10 extends substantially in the axial direction. The groove 10 is referred to as a lateral groove 18. As shown in FIG. 1, a large number of lateral grooves 18 are formed on the tread 4. Each lateral groove 18 is connected to the circumferential grooves 12. The lateral groove 18 contributes to guiding a water film present between the tread 4 and a road surface. In the tire 2, wet performance is improved. Furthermore, the lateral groove 18 serves as an edge component in the axial direction and contributes to improvement of traction performance on a wet road surface.

As shown in FIG. 1, in the tire 2, sipes 20 can be provided in the lateral grooves 18. The sipes 20 contribute to ensuring flexibility of the tread 4.

At each of the positions where each lateral groove 18 is connected to the circumferential grooves 12, an opening of the lateral groove 18 is provided in a wall of the circumferential groove 12. In FIG. 1, reference character M1 indicates the boundary between one wall of the lateral groove 18 and the wall of the circumferential groove 12. Reference character M2 indicates the boundary between another wall of the lateral groove 18 and the wall of the circumferential groove 12. The portion between the boundary M1 and the boundary M2 corresponds to the opening of the lateral groove 18 provided in the wall of the circumferential groove 12.

Among the lateral grooves 18 formed on the tread 4, the lateral groove 18 extending between one circumferential groove 12 and another circumferential groove 12 located adjacent to the one circumferential groove 12 is a first lateral groove 22. The lateral grooves 18 formed on the tread 4 include first lateral grooves 22. In the tire 2, the lateral grooves 18 formed on the center land portion 8c and the middle land portions 8m are the first lateral grooves 22. In particular, the first lateral grooves 22 formed on the center land portion 8c are referred to as first center lateral grooves 22c, and the first lateral grooves 22 formed on the middle land portions 8m are referred to as first middle lateral grooves 22m. Each first center lateral groove 22c extends between one center circumferential groove 12ca and another center circumferential groove 12cb. Each first middle lateral groove 22m extends between the center circumferential groove 12c and the shoulder circumferential groove 12s.

Among the lateral grooves 18 formed on the tread 4, the lateral grooves 18 extending between the end PE portions of the tread surface 6, that is, the end portions of the tread 4, and the circumferential grooves 12 are second lateral grooves 24. The lateral grooves 18 formed on the tread 4 include second lateral grooves 24. In the tire 2, the lateral grooves 18 formed on the shoulder land portion 8s are the second lateral grooves 24. Each second lateral groove 24 extends between the end portion of the tread 4 and the shoulder circumferential groove 12s.

In the tire 2, from the viewpoint of contribution to drainage performance and traction performance, the width of each lateral groove 18 is preferably about 70 to 130% of the width of the circumferential groove 12. The depth of each lateral groove 18 is preferably 10 to 25 mm.

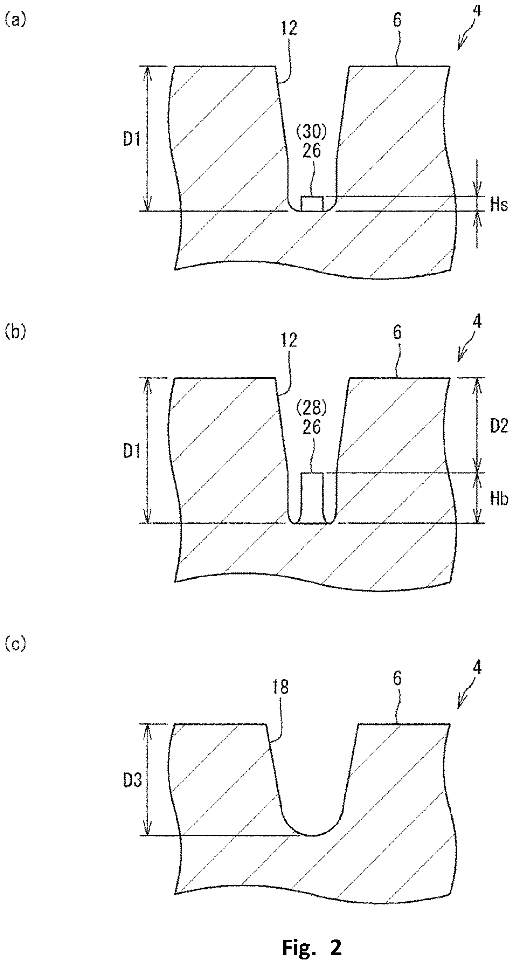

As shown in FIG. 1, in the tire 2, each circumferential groove 12 includes a large number of projections 26. These projections 26 are arranged at intervals along the circumferential groove 12. As shown in FIGS. 2(a) and (b), the projections 26 project outward from the bottom surface of the circumferential groove 12. The projections 26 are located at the center, in the width direction, of the groove 10.

In the tire 2, the projections 26 are provided in all the circumferential grooves 12 formed on the tread 4. The projections 26 may be provided only in the center circumferential groove 12c, or the projections 26 may be provided only in the shoulder circumferential grooves 12s. No projections 26 are provided in the lateral grooves 18 of the tire 2.

In the tire 2, the projections 26 provided in the circumferential grooves 12 include first projections 28 and second projections 30. Projections 26 having large volumes are the first projections 28, and projections 26 having small volumes are the second projections 30. The second projections 30 have volumes smaller than those of the first projections 28.

As shown in FIG. 1, each first projection 28 is located at the position where the lateral groove 18 is connected to the circumferential groove 12. In FIG. 1, reference character B1 indicates one end of the first projection 28, and reference character B2 indicates another end of the first projection 28. In the circumferential direction, the opening of the lateral groove 18 is located between the end B1 and the end B2 of the first projection 28. In other words, in the axial direction, the entirety of the opening of the lateral groove 18 overlaps the first projection 28.

In the tire 2, the projections 26 provided in each circumferential groove 12 reduce the volume of the circumferential groove 12 and also serve as obstacles for the air passing through the circumferential groove 12. The projections 26 contribute to a reduction in air column resonance sound. The projections 26 also serve as obstacles for stones that are about to enter the circumferential groove 12. Thus, in the tire 2, stones are less likely to be trapped into the circumferential groove 12.

As described above, the projections 26 provided in each circumferential groove 12 include the first projections 28 having large volumes and the second projections 30 having small volumes. Since the projections 26 having different volumes, that is, different sizes, are provided, turbulent flow occurs in the air passing through the circumferential groove 12. The occurrence of turbulent flow contributes to a reduction in air column resonance sound. Since the first projections 28 having large volumes and the second projections 30 having small volumes are provided, even if a stone becomes trapped in a first projection 28 portion, the stone moves during subsequent running and is discharged from a second projection 30 portion. In the tire 2, stones are less likely to be retained in the circumferential groove 12.

As described above, each lateral groove 18 is connected to the circumferential grooves 12, and the first projection 28 is located at each of the positions where each lateral groove 18 is connected to the circumferential grooves 12. In the axial direction, the entirety of the opening of the lateral groove 18 overlaps the first projection 28. The first projection 28 blocks the inflow of air from the lateral groove 18 into the circumferential groove 12, and thus amplification of air column resonance sound due to the inflow of air is inhibited. The first projection 28 located at each connection position contributes to a reduction in air column resonance sound. In the tire 2, since the first projection 28 having a large volume is located at each of the positions where each lateral groove 18 is connected to the circumferential grooves 12, stone trapping at this connection position is inhibited.

In the tire 2, air column resonance sound is reduced by the projections 26 provided in each circumferential groove 12. In the tire 2, quietness is improved. Since trapping of stones into the circumferential groove 12 is inhibited by the projections 26, anti-stone trapping performance is improved in the tire 2.

In the tire 2, although a large number of projections 26 is provided in each circumferential groove 12, not all the projections 26 are first projections 28 having large volumes, and the projections 26 also include second projections 30 having volumes smaller than those of the first projections 28. The second projections 30 contribute to ensuring the volume of the circumferential groove 12. Since the volume of the circumferential groove 12 is appropriately maintained, a reduction in wet performance is inhibited in the tire 2. In the tire 2, quietness is improved while a reduction in wet performance is inhibited. In addition, in the tire 2, anti-stone trapping performance is improved while a reduction in wet performance is inhibited.

As shown in FIG. 1, each circumferential groove 12 of the tire 2 is a zigzag circumferential groove extending in a zigzag manner. In the tire 2, the center circumferential groove 12c continuously extends in the circumferential direction in a zigzag manner. Each shoulder circumferential groove 12s continuously extends in the circumferential direction in a zigzag manner.

Each circumferential groove 12 has zigzag peaks 32a projecting at one side in the axial direction and zigzag peaks 32b projecting at the other side in the axial direction. In the circumferential groove 12, the zigzag peaks 32a and the zigzag peaks 32b are alternately arranged in the circumferential direction. The circumferential groove 12 continuously extends in the circumferential direction while bending in a zigzag manner.

Since each circumferential groove 12 continuously extends in the circumferential direction, the circumferential groove 12 can smoothly guide, on a wet road surface, a water film present between the tread 4 and the road surface, in the circumferential direction. Since the circumferential groove 12 bends in a zigzag manner, the circumferential groove 12 serves as an edge component in the axial direction and can contribute to improvement of traction performance on a wet road surface. From this viewpoint, in the tire 2, each circumferential groove 12 is preferably a zigzag circumferential groove extending in a zigzag manner.

As shown in FIG. 1, each first center lateral groove 22c extends between a zigzag peak 32b of the one center circumferential groove 12ca and a zigzag peak 32a of the other center circumferential groove 12cb. One first middle lateral groove 22ma extends between a zigzag peak 32a of the one center circumferential groove 12ca and a zigzag peak 32b of one shoulder circumferential groove 12sa. Another first middle lateral groove 22mb extends between a zigzag peak 32b of the other center circumferential groove 12cb and a zigzag peak 32a of another shoulder circumferential groove 12sb.

One second lateral groove 24a extends between one end portion of the tread 4 and a zigzag peak 32a of the one shoulder circumferential groove 12sa. Another second lateral groove 24b extends between the other end portion of the tread 4 and a zigzag peak 32b of the other shoulder circumferential groove 12sb.

In the tire 2, each lateral groove 18 is connected, at a zigzag peak 32 of the circumferential groove 12, to the circumferential groove 12. The zigzag peaks 32 of the circumferential groove 12 are formed at the edges at the outer side of bending of the circumferential groove 12, that is, the zigzag circumferential groove. The lateral groove 18 is connected to the zigzag circumferential groove at the outer side of bending of the zigzag circumferential groove.

In the tire 2, each first lateral groove 22 is provided on a portion in which the distance between the left and right circumferential grooves 12 is short. The first lateral groove 22 is formed so as to have a short length. Each second lateral groove 24 is provided on a portion in which the width of the shoulder land portion 8s is small. The second lateral groove 24 is formed so as to have a short length. In the tire 2, each lateral groove 18 is formed so as to have a short length. The short lateral groove 18 contributes to ensuring a sufficient contact area. In the tire 2, good grip performance is maintained. From this viewpoint, in the tire 2, in the case where each circumferential groove 12 is a zigzag circumferential groove, each lateral groove 18 is preferably connected to the zigzag circumferential groove at the outer side of bending of the zigzag circumferential groove.

As described above, in the tire 2, each first projection 28 is located at each of the positions where each lateral groove 18 is connected to the circumferential grooves 12. As shown in FIG. 1, the first projection 28 bends in the same direction as the direction in which the circumferential groove 12, that is, the zigzag circumferential groove, bends. In the tire 2, the first projection 28 blocks the inflow of air from the lateral groove 18 into the circumferential groove 12 and smoothly divides the inflow of air into two flows. The first projection 28 alleviates the impact by the flowing air and also effectively generates turbulent flow in the air passing through the circumferential groove 12. In the tire 2, amplification of air column resonance sound is effectively inhibited. In the tire 2, since the first projection 28 bends in the same direction as the direction in which the zigzag circumferential groove bends, the space formed between the first projection 28 and the wall of the circumferential groove 12 is inhibited from being uneven in size. In the tire 2, trapping of stones at each of the positions where each lateral groove 18 is connected to the circumferential grooves 12 is effectively inhibited. From this viewpoint, in the case where each circumferential groove 12 is a zigzag circumferential groove, the first projection 28 preferably bends in the same direction as the direction in which the zigzag circumferential groove bends.

FIG. 2(a) shows a cross-section of a portion, of the circumferential groove 12, in which the second projection 30 is provided. FIG. 2(b) shows a cross-section of a portion, of the circumferential groove 12, in which the first projection 28 is provided. FIG. 2(c) shows a cross-section of the lateral groove 18. The cross-sections shown in FIGS. 2(a) to (c) are each a cross-section taken along a plane perpendicular to the direction in which the groove 10 extends.

In FIGS. 2(a) and (b), a double-headed arrow D1 represents the depth of the circumferential groove 12. The depth D1 is represented as the length from the tread surface 6 to the bottom of the circumferential groove 12. In FIG. 2(a), a double-headed arrow Hs represents the height of the second projection 30. The height Hs is represented as the length from the bottom of the circumferential groove 12 to the top surface of the second projection 30. In FIG. 2(b), a double-headed arrow Hb represents the height of the first projection 28. The height Hb is represented as the length from the bottom of the circumferential groove 12 to the top surface of the first projection 28. A double-headed arrow D2 represents the depth from the tread surface 6 to the first projection 28. The depth D2 is represented as the length from the tread surface 6 to the top surface of the first projection 28. In FIG. 2(c), a double-headed arrow D3 represents the depth of the lateral groove 18. The depth D3 is represented as the length from the tread surface 6 to the bottom of the lateral groove 18. In this tire, the sum of the depth D2 and the height Hb is equal to the depth D1.

As described above, in the tire 2, the first projections 28 have large volumes, and the second projections 30 have small volumes. In particular, in the tire 2, the first projections 28 are taller than the second projections 30. Since the projections 26 provided in each circumferential groove 12 include the first projections 28 having a large height Hb and the second projections 30 having a small height Hs, turbulent flow effectively occurs in the air passing through the circumferential groove 12. The occurrence of turbulent flow contributes to a reduction in air column resonance sound. Since the first projections 28 having a large height Hb and the second projections 30 having a small height Hs are provided, even if a stone becomes trapped in a first projection 28 portion, the stone moves during subsequent running and is discharged from a second projection 30 portion. In the tire 2, stones are less likely to be retained in the circumferential groove 12. From this viewpoint, the first projections 28 are preferably taller than the second projections 30.

In the tire 2, the ratio of the height Hb of each first projection 28 to the height Hs of each second projection 30 is preferably not less than 2. Accordingly, the height difference between the first projection 28 and the second projection 30 effectively contributes to occurrence of turbulent flow in the air passing through the circumferential groove 12. In the tire 2, air column resonance sound is reduced. The height difference between the first projection 28 and the second projection 30 effectively inhibits stones from being retained in the circumferential groove 12. In the tire 2, anti-stone trapping performance is improved. From this viewpoint, this ratio is more preferably not less than 3.

As shown in FIG. 2(b), in the tire 2, the top surface of the first projection 28 is located inward of the tread surface 6. Accordingly, the influence of the first projection 28 on ensuring the volume of the circumferential groove 12 is reduced. In the tire 2, a reduction in wet performance is inhibited. From this viewpoint, the ratio of the height Hb of the first projection 28 to the depth D1 of the circumferential groove 12 is preferably not greater than 0.40 and more preferably not greater than 0.35. From the viewpoint that the first projection 28 can effectively contribute to a reduction in air column resonance sound and inhibition of stone trapping, this ratio is preferably not less than 0.25 and more preferably not less than 0.30.

In the tire 2, the depth D2 of each first projection 28 is preferably smaller than the depth D3 of each lateral groove 18. Accordingly, the first projection 28 effectively blocks the inflow of air from the lateral groove 18 into the circumferential groove 12, and thus amplification of air column resonance sound due to the inflow of air is effectively inhibited. The first projection 28 effectively inhibits stone trapping. From this viewpoint, the difference between the depth D3 of the lateral groove 18 and the depth D2 of the first projection 28 is more preferably not less than 1.5 mm. In particular, when the difference between the depth D3 of the lateral groove 18 and the depth D2 of the first projection 28 is not less than 1.5 mm and the ratio of the depth D2 of the first projection 28 to the depth D1 of the circumferential groove 12 is in the range of not less than 0.60 and not greater than 0.80, preferably, when this ratio is in the range of not less than 0.61 and not greater than 0.76, the first projection 28 effectively contributes to inhibition of amplification of air column resonance sound due to the inflow of air and also effectively inhibits stone trapping.

In FIG. 1, a double-headed arrow Lb represents the length of the first projection 28. The length Lb is represented as the distance in the circumferential direction from the one end B1 of the first projection 28 to the other end B2 of the first projection 28. A double-headed arrow Ls represents the length of the second projection 30. The length Ls is represented as the distance in the circumferential direction from one end S1 of the second projection 30 to another end S2 of the second projection 30.

As described above, in the tire 2, the first projections 28 have large volumes, and the second projections 30 have small volumes. In particular, in the tire 2, the first projections 28 are longer than the second projections 30. Since the projections 26 provided in each circumferential groove 12 include the first projections 28 having a large length Lb and the second projections 30 having a small length Ls, turbulent flow effectively occurs in the air passing through the circumferential groove 12. The occurrence of turbulent flow contributes to a reduction in air column resonance sound. Since the long first projections 28 and the short second projections 30 are provided, stones are effectively inhibited from being retained in the circumferential groove 12. In the tire 2, trapping of stones into the circumferential groove 12 is inhibited. From this viewpoint, the first projections 28 are preferably longer than the second projections 30.

In the tire 2, the ratio of the length Lb of each first projection 28 to the length Ls of each second projection 30 is preferably not less than 3. Accordingly, the length difference between the first projection 28 and the second projection 30 effectively contributes to occurrence of turbulent flow in the air passing through the circumferential groove 12. In the tire 2, air column resonance sound is reduced. The provision of the projections 26 having different lengths inhibits trapping of stones into the circumferential groove 12. From this viewpoint, this ratio is preferably not less than 4. From the viewpoint of being able to ensure the volume of the circumferential groove 12 and inhibiting a reduction in wet performance, this ratio is preferably not greater than 6.

In FIG. 1, a double-headed arrow SP represents the interval between the projections 26. In FIG. 1, the interval SP is represented as the distance in the circumferential direction from the other end B2 of the first projection 28 to the one end S1 of the second projection 30. A double-headed arrow W1 represents the width of the projection 26. A double-headed arrow W2 represents the width of the circumferential groove 12. A double-headed arrow W3 represents the width of the lateral groove 18.

In the tire 2, from the viewpoint of being able to effectively cause turbulent flow to occur in the air passing through the circumferential groove 12 and also inhibiting trapping of stones into the circumferential groove 12, the ratio of the interval SP between the projections 26 to the length Ls of the second projection 30 is preferably not greater than 2.0 and more preferably not greater than 1.0. From the viewpoint of being able to ensure the volume of the circumferential groove 12 and inhibiting a reduction in wet performance, this ratio is preferably not less than 0.5.

In the tire 2, from the viewpoint of being able to effectively cause turbulent flow to occur in the air passing through the circumferential groove 12 and also inhibiting trapping of stones into the circumferential groove 12, the ratio of the width W1 of the projection 26 to the width W2 of the circumferential groove 12 is preferably not less than 0.2 and more preferably not less than 0.25. From the viewpoint of being able to ensure the volume of the circumferential groove 12 and inhibiting a reduction in wet performance, this ratio is preferably not greater than 0.4 and more preferably not greater than 0.33.

As described above, in the tire 2, the inflow of air from the lateral groove 18 into the circumferential groove 12 is blocked by the first projection 28. In addition, trapping of a stone at the position where the lateral groove 18 is connected to the circumferential groove 12 is also inhibited by the first projection 28. From the viewpoint of effectively exhibiting the effect of blocking the inflow of air and effectively inhibiting trapping of a stone at the connection position, the length Lb of the first projection 28 is preferably larger than the width W3 of the lateral groove 18. Specifically, the difference between the length Lb of the first projection 28 and the width W3 of the lateral groove 18 is preferably not less than 2 mm and preferably not greater than 8 mm.

As shown in FIG. 1, in each circumferential groove 12, the first projections 28 and the second projections 30 are alternately arranged. In the circumferential groove 12 in which the first projections 28 and the second projections 30 are alternately arranged, turbulent flow effectively occurs in the air passing through the circumferential groove 12. In the tire 2, trapping of stones into the circumferential groove 12 is effectively inhibited. From this viewpoint, in the tire 2, the first projections 28 and the second projections 30 are preferably arranged alternately in each circumferential groove 12.

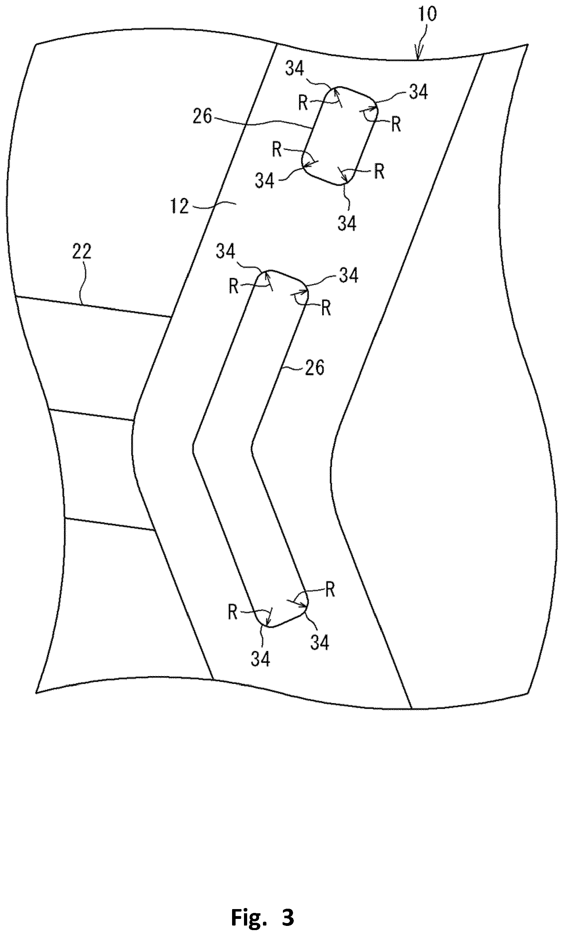

FIG. 3 shows the top surfaces of the projections 26 provided in the circumferential groove 12. Each projection 26 has four corners 34. Each corner 34 extends outward from the bottom surface of the circumferential groove 12. In the tire 2, the corners 34 of the projections 26 can be rounded as shown in FIG. 3. In this case, since each corner 34 is round, a stone is less likely to be caught between the first projection 28 and the second projection 30. In the tire 2, trapping of stones into the circumferential groove 12 is effectively inhibited. From this viewpoint, the corners 34 of the projections 26 are preferably rounded.

In FIG. 3, an arrow R represents the radius of the circular arc representing the contour of each rounded corner 34. In the tire 2, from the viewpoint of effectively inhibiting trapping of stones into the circumferential groove 12, the radius R of the circular arc is preferably not less than 1 mm and preferably not greater than 5 mm. The contour of the corner 34 is specified on the basis of the shape of the top surface of the projection 26. The contour of the corner 34 can also be specified by the cavity face (not shown) of a mold for shaping the outer surface of the tire 2.

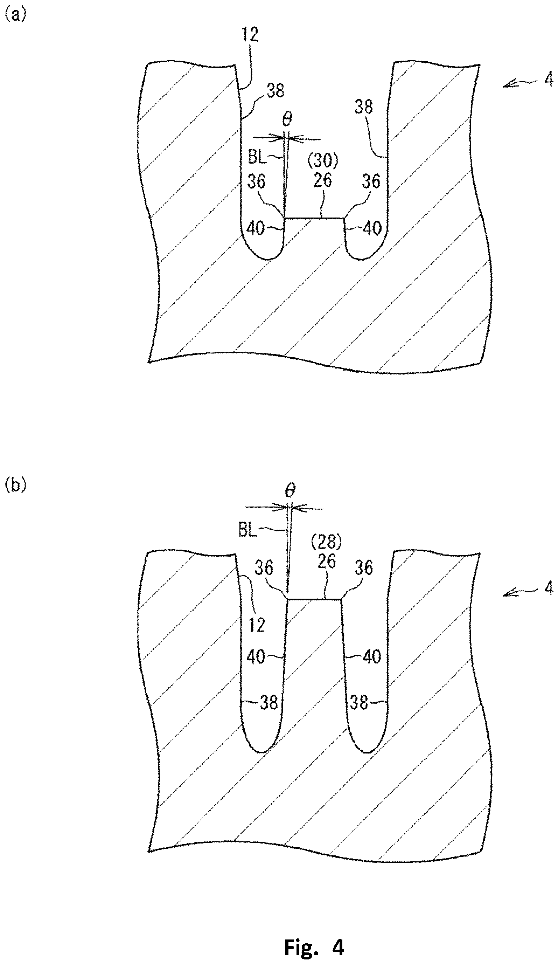

FIG. 4 shows cross-sections of the projections 26. The cross-sections are each a cross-section taken along a plane perpendicular to the direction in which the circumferential groove 12 extends. FIG. 4(a) shows a cross-section of the second projection 30, and FIG. 4(b) shows a cross-section of the first projection 28. In FIG. 4, a solid line BL is a straight line passing through an edge 36 of the projection 26 and extending in the height direction of the projection 26. The height direction is specified by the direction of a line segment that defines the height of the projection 26.

In the tire 2, each projection 26 has side surfaces 40 opposing walls 38 of the circumferential groove 12. As shown in FIG. 4, in the tire 2, each projection 26 may be formed such that each side surface 40 of the projection 26 is tilted relative to the height direction of the projection 26. In this case, since each side surface 40 is tilted, even if a stone becomes caught between the side surface 40 and the wall 38 of the circumferential groove 12, discharge of the stone is promoted. From this viewpoint, in the tire 2, each side surface 40 of each projection 26 is preferably tilted relative to the height direction of the projection 26.

In FIG. 4, reference character θ represents the angle formed by the side surface 40 of the projection 26 relative to the height direction of the projection 26, that is, the tilt angle of the side surface 40. In the tire 2, from the viewpoint of effectively inhibiting trapping of stones into the circumferential groove 12, the tilt angle θ of the side surface 40 is preferably not less than 3° and preferably not greater than 15°.

As is obvious from the above description, according to the present invention, the heavy duty pneumatic tire 2 having improved quietness while inhibiting a reduction in wet performance is obtained. In addition, in another aspect, according to the present invention, the heavy duty pneumatic tire 2 having improved anti-stone trapping performance while inhibiting a reduction in wet performance is obtained.

### EXAMPLES

The present invention will be described in more detail below by means of examples.

### [Experiment 1]

### [Example 1]

A heavy duty pneumatic tire (tire size = 275/80R22.5) including a tread with the configuration shown in FIG. 1 and having the specifications shown in Table 1 below was obtained.

In Example 1, the projections provided in each circumferential groove included large first projections and small second projections, and each first projection was provided at the position where the lateral groove was connected to the circumferential groove. This is represented as "Y" in the cell of "Position of first projection" in Table 1 below.

In Example 1, as shown in FIG. 1, in the axial direction, the entirety of each opening of each lateral groove overlapped the first projection. The difference (Lb-W3) between the length Lb of each first projection and the width W3 of each lateral groove was set to 6.0 mm. The width W3 of each lateral groove was 10.0 mm.

In Example 1, in each circumferential groove, the first projections and the second projections were alternately arranged. This is represented as "Y" in the cell of "Projection arrangement" in Table 1 below.

In Example 1, the ratio (Hb/Hs) of the height Hb of each first projection to the height Hs of each second projection was 3.00. The ratio (Hb/D1) of the height Hb of each first projection to the depth D1 of each circumferential groove was 0.36. The depth D1 of each circumferential groove was 16.5 mm, and the height Hs of each second projection was 2.0 mm.

In Example 1, the ratio (Lb/Ls) of the length Lb of each first projection to the length Ls of each second projection was 4.00. The ratio (SP/Ls) of the interval SP between the projections to the length Ls of each second projection was 1.00.

In Example 1, the ratio (W1/W2) of the width W1 of each projection to the width W2 of each circumferential groove was 0.25. The width W2 of each circumferential groove was 8.0 mm. The difference (D3-D2) between the depth D3 of each lateral groove and the depth D2 from the outer surface of the tread, that is, the tread surface, to each first projection was 2.5 mm. The depth D3 of each lateral groove was 13.0 mm.

### [Comparative Example 1]

A tire of Comparative Example 1 was obtained in the same manner as Example 1, except that no projections were provided in each circumferential groove. The tire of Comparative Example 1 is a conventional tire.

### [Comparative Examples 2 and 3]

Tires of Comparative Examples 2 and 3 were obtained in the same manner as Comparative Example 1, except that the depth D1 of each circumferential groove and the depth D3 of each lateral groove were changed. In Comparative Example 2, each of the depth D1 of each circumferential groove and the depth D3 of each lateral groove was set to 10.0 mm. In Comparative Example 3, each of the depth D1 of each circumferential groove and the depth D3 of each lateral groove was set to 20.0 mm.

### [Examples 2 and 3]

Tires of Examples 2 and 3 were obtained in the same manner as Example 1, except that the height Hb and the depth D2 of each first projection were changed such that the ratio (Hb/Hs), the ratio (Hb/D1), and the difference (D3-D2) were as shown in Tables 1 and 2 below.

### [Comparative Example 4]

A tire of Comparative Example 4 was obtained in the same manner as Example 1, except that the length Lb of each first projection and the interval SP between the projections were changed such that the ratio (Lb/Ls), the ratio (SP/Ls), and the difference (Lb-W3) were as shown in Table 1 below. In Comparative Example 4, since the length Lb of each first projection was smaller than the width W3 of each lateral groove, each first projection was not able to cover the entirety of the opening of the lateral groove in the axial direction.

### [Comparative Example 5]

A tire of Comparative Example 5 was obtained in the same manner as Example 1, except that second projections were provided at the positions where the lateral grooves were connected to the circumferential grooves. The provision of the second projections at the connection positions is represented as "N" in the cell of "Position of first projection" in Table 2 below. In Comparative Example 5, since the length Ls of each second projection was smaller than the width W3 of each lateral groove, each second projection was not able to cover the entirety of the opening of the lateral groove in the axial direction.

### [Example 4]

A tire of Example 4 was obtained in the same manner as Example 1, except that the height Hb, the length Lb, the width W1, and the depth D2 of each first projection and the interval SP between the projections were changed such that the ratio (Hb/Hs), the ratio (Lb/Ls), the ratio (Hb/D1), the ratio (SP/Ls), the ratio (W1/W2), the difference (Lb-W3), and the difference (D3-D2) were as shown in Table 2 below.

### [Example 5]

A tire of Example 5 was obtained in the same manner as Example 1, except that the height Hb, the length Lb, the width W1, and the depth D2 of each first projection, the depth D3 of each lateral groove, and the interval SP between the projections were changed such that the ratio (Hb/Hs), the ratio (Lb/Ls), the ratio (Hb/D1), the ratio (SP/Ls), the ratio (W1/W2), the difference (Lb-W3), and the difference (D3-D2) were as shown in Table 2 below. The depth D3 of each lateral groove was 14.5 mm.

### [Example 6]

A tire of Example 6 was obtained in the same manner as Example 1, except that two second projections were provided between two first projections in each circumferential groove, and the length Lb of each first projection and the interval SP were changed such that the ratio (Lb/Ls), the ratio (SP/Ls), and the difference (Lb-W3) were as shown in Table 2 below. The provision of two second projections between two first projections is represented as "N" in the cell of "Projection arrangement" in Table 2.

### [Noise Level Outside Vehicle]

Test tires were fitted onto rims (size = 22.5×7.50) and inflated with air. The internal pressure of each tire was adjusted to 900 kPa. The tires were mounted to the front wheels of a truck. Luggage was loaded on the bed of the truck such that a load of 33.8 kN was applied to each tire. This truck was caused to coast on a straight asphalt road surface at a passing speed of 50 km/h for 50 m with the engine turned off, the maximum level dB (A) of passing noise was measured at the midpoint of the course by a stationary microphone placed 7.5 m laterally from a running center line and 1.2 m from the road surface, and the difference from the measurement result of Comparative Example 1 was obtained. The results are shown in the cells of Noise level outside vehicle in Tables 1 and 2 below. A lower value indicates that the noise level outside the vehicle is lower and that the quietness is better. The use of Comparative Example 1 as a reference is represented as "BM" in Table 1.

### [Wet Performance]

Test tires were fitted onto rims (size = 22.5×7.50) and inflated with air. The internal pressure of each tire was adjusted to 900 kPa. The tires were mounted to the front wheels of the truck used in the above-described evaluation of noise level outside the vehicle. The truck was unloaded. While the speed was increased stepwise, the truck was caused to enter an asphalt road surface having a radius of 100 m and provided with a puddle having a depth of 5 mm and a length of 20 m, and the lateral acceleration (lateral G) of the front wheels was measured. An average lateral G at speeds of 50 km/h to 80 km/h was obtained. The results are shown as indexes in the cells of WET performance in Tables 1 and 2 below. A higher value indicates that the wet performance is better. The acceptance criterion is that the value is 90 or more.

**[Table 1]**

| | Ex. 1 | Comp. Ex. 1 | Comp. Ex. 2 | Comp. Ex. 3 | Ex. 2 | Comp. Ex. 4 |
|---|---|---|---|---|---|---|
| Ratio (Hb/Hs) [-] | 3.00 | - | - | - | 2.00 | 3.00 |
| Ratio (Lb/Ls) [-] | 4.00 | - | - | - | 4.00 | 2.00 |
| Ratio (Hb/D1) [-] | 0.36 | - | - | - | 0.24 | 0.36 |
| Ratio (SP/Ls) [-] | 1.00 | - | - | - | 1.00 | 2.00 |
| Ratio (W1/W2) [-] | 0.25 | - | - | - | 0.25 | 0.25 |
| Projection arrangement | Y | - | - | - | Y | Y |
| Position of first projection | Y | - | - | - | Y | Y |
| Difference (Lb-W3) [mm] | 6.0 | - | - | - | 6.0 | -2.0 |
| Difference (D3-D2) [mm] | 2.5 | - | - | - | -0.5 | 2.5 |
| Noise level outside vehicle | -3.0 dB | BM | -3.0 dB | +2.5dB | -1.5 dB | -0.9 dB |
| Wet performance | 95 | 100 | 80 | 110 | 98 | 97 |

**[Table 2]**

| | Ex. 3 | Comp. Ex. 5 | Ex. 4 | Ex. 5 | Ex. 6 |
|---|---|---|---|---|---|
| Ratio (Hb/Hs) [-] | 5.00 | 3.00 | 3.25 | 2.00 | 3.00 |
| Ratio (Lb/Ls) [-] | 4.00 | 4.00 | 5.00 | 3.00 | 3.50 |
| Ratio (Hb/D1) [-] | 0.61 | 0.36 | 0.39 | 0.24 | 0.36 |
| Ratio (SP/Ls) [-] | 1.00 | 1.00 | 0.50 | 1.50 | 0.50 |
| Ratio (W1/W2) [-] | 0.25 | 0.25 | 0.38 | 0.20 | 0.25 |
| Projection arrangement | Y | Y | Y | Y | N |
| Position of first projection | Y | N | Y | Y | Y |
| Difference (Lb-W3) [mm] | 6.0 | 6.0 | 10.0 | 2.0 | 4.0 |
| Difference (D3-D2) [mm] | 6.5 | 2.5 | 3.0 | 2.0 | 2.5 |
| Noise level outside vehicle | -3.1 dB | -0.9 dB | -3.3 dB | -2.5 dB | -2.5 dB |
| Wet performance | 90 | 95 | 93 | 97 | 95 |

As shown in Tables 1 and 2, it is confirmed that in the Examples, quietness is improved while a reduction in wet performance is inhibited. The Examples have better evaluations than the Comparative Examples. From the evaluation results, advantages of the present invention are clear.

### [Experiment 2]

### [Example 7]

A heavy duty pneumatic tire (tire size = 295/80R22.5) including a tread with the configuration shown in FIG. 1 and having the specifications shown in Table 3 below was obtained.

In Example 7, the projections provided in each circumferential groove included large first projections and small second projections, and each first projection was provided at the position where the lateral groove was connected to the circumferential groove. This is represented as "Y" in the cell of "Position of first projection" in Table 3 below.

In Example 7, as shown in FIG. 1, in the axial direction, the entirety of each opening of each lateral groove overlapped the first projection. The difference (Lb-W3) between the length Lb of each first projection and the width W3 of each lateral groove was set to 8.0 mm. The width W3 of each lateral groove was 10.0 mm.

In Example 7, in each circumferential groove, the first projections and the second projections were alternately arranged. This is represented as "Y" in the cell of "Projection arrangement" in Table 3 below.

In Example 7, the ratio (Hb/Hs) of the height Hb of each first projection to the height Hs of each second projection was 3.00. The ratio (Hb/D1) of the height Hb of each first projection to the depth D1 of each circumferential groove was 0.35. The depth D1 of each circumferential groove was 17.2 mm, and the height Hs of each second projection was 2.0 mm.

In Example 7, the ratio (Lb/Ls) of the length Lb of each first projection to the length Ls of each second projection was 3.00. The ratio (SP/Ls) of the interval SP between the projections to the length Ls of each second projection was 0.67.

In Example 7, the ratio (W1/W2) of the width W1 of each projection to the width W2 of each circumferential groove was 0.29. The width W2 of each circumferential groove was 7.0 mm. The difference (D3-D2) between the depth D3 of each lateral groove and the depth D2 from the outer surface of the tread, that is, the tread surface, to each first projection was 2.3 mm. The depth D3 of each lateral groove was 13.5 mm.

In Example, 7, the corners of the projections were rounded as shown in FIG. 3. The radius R of the circular arc representing the contour of each rounded corner was 1.0 mm.

In Example 7, each projection was formed such that each side surface of the projection was tilted relative to the height direction of the projection as shown in FIG. 4. The tilt angle θ of the side surface was 3.0°.

### [Example 8]

A tire of Example 8 was obtained in the same manner as Example 7, except that the height Hb and the depth D2 of each first projection were changed such that the ratio (Hb/Hs), the ratio (Hb/D1), and the difference (D3-D2) were as shown in Table 3 below.

### [Comparative Example 6]

A tire of Comparative Example 6 was obtained in the same manner as Example 7, except that no projections were provided in each circumferential groove. The tire of Comparative Example 6 is a conventional tire.

### [Example 9]

A tire of Example 9 was obtained in the same manner as Example 7, except that the corners of the projections were not rounded and the tilt angle θ of each side surface was as shown in Table 3 below.

### [Anti-Stone Trapping Performance]

Test tires were fitted onto rims (size = 22.5×8.25) and inflated with air. The internal pressure of each tire was adjusted to 900 kPa. The tires were mounted to all of the wheels of a truck. A loading amount was adjusted such that the load applied to each tire was 35.79 kN. The tires were caused to run on a gravel road for 5 km, and then the number of stones remaining in the grooves was counted. The results are shown as indexes in the cells of Stone trapping level in Table 3 below. A lower value indicates that the number of stones trapped is small and the anti-stone trapping performance is better.

### [Wet Performance]

Wet performance was evaluated in the same manner as Experiment 1, except the size of each rim was 22.5x8.25. The results are shown as indexes in the cells of Wet performance in Table 3 below. A higher value indicates that the wet performance is better. The acceptance criterion is that the value is 90 or more.

**[Table 3]**

| | Ex. 7 | Ex. 8 | Comp. Ex. 6 | Ex. 9 |
|---|---|---|---|---|
| Ratio (Hb/Hs) [-] | 3.00 | 3.25 | - | 3.00 |
| Ratio (Lb/Ls) [-] | 3.00 | 3.00 | - | 3.00 |
| Ratio (Hb/D1) [-] | 0.35 | 0.38 | - | 0.35 |
| Ratio (SP/Ls) [-] | 0.67 | 0.67 | - | 0.67 |
| Ratio (W1/W2) [-] | 0.29 | 0.29 | - | 0.29 |
| Projection arrangement | Y | Y | - | Y |
| Position of first projection | Y | Y | - | Y |
| Difference (Lb-W3) [mm] | 8.0 | 8.0 | - | 8.0 |
| Difference (D3-D2) [mm] | 2.3 | 2.8 | - | 2.3 |
| Radius R [mm] | 1.0 | 1.0 | - | - |
| Angle θ [°] | 3.0 | 3.0 | - | 2.0 |
| Stone trapping level | 80 | 75 | 100 | 90 |
| WET performance | 95 | 90 | 100 | 95 |

As shown in Table 3, it is confirmed that in the Examples, anti-stone trapping performance is improved while a reduction in wet performance is inhibited. The Examples have better evaluations than the Comparative Example. From the evaluation results, advantages of the present invention are clear.

The above-described technology for improving quietness while inhibiting a reduction in wet performance and the above-described technology for improving anti-stone trapping performance while inhibiting a reduction in wet performance can be applied to various tires.

## Claims

1. A heavy duty pneumatic tire (2) comprising a tread (4) that comes into contact with a road surface, wherein
the tread (4) includes at least three land portions (8, 8c, 8m, 8s) extending in a circumferential direction, and a circumferential groove (10, 12, 12c, 12ca, 12cb, 12s, 12sa, 12sb) is present between one land portion (8, 8c, 8m, 8s) and another land portion (8, 8c, 8m, 8s) located adjacent to the one land portion (8, 8c, 8m, 8s),
the land portion (8, 8c, 8m, 8s) includes a large number of blocks (14) aligned in the circumferential direction, and a lateral groove (10, 18) is present between one block (14) and another block (14) located adjacent to the one block (14),
the circumferential groove (10, 12, 12c, 12ca, 12cb, 12s, 12sa, 12sb) includes a large number of projections (26) projecting from a bottom surface of the circumferential groove (10, 12, 12c, 12ca, 12cb, 12s, 12sa, 12sb),
the projections (26) include first projections (28) and second projections (30),
the second projections (30) have volumes smaller than those of the first projections (28),
the lateral groove (10, 18) is connected to the circumferential groove (10, 12, 12c, 12ca, 12cb, 12s, 12sa, 12sb), and each first projection (28) is located at a position where the lateral groove (10, 18) is connected to the circumferential groove (10, 12, 12c, 12ca, 12cb, 12s, 12sa, 12sb), and,
in the circumferential direction, an opening of the lateral groove (10, 18) is located between an end (B1) of the first projection (28) and another end (B2) of the first projection (28),
**characterized in that** the first projections (28) are taller than the second projections (30).

2. The heavy duty pneumatic tire (2) according to claim 1, wherein the circumferential groove (10, 12, 12c, 12ca, 12cb, 12s, 12sa, 12sb) is a zigzag circumferential groove (10, 12, 12c, 12ca, 12cb, 12s, 12sa, 12sb) extending in a zigzag manner.

3. The heavy duty pneumatic tire (2) according to claim 2, wherein the lateral groove (10, 18) is connected to the zigzag circumferential groove (10, 12, 12c, 12ca, 12cb, 12s, 12sa, 12sb) at an outer side of bending of the zigzag circumferential groove (10, 12, 12c, 12ca, 12cb, 12s, 12sa, 12sb).

4. The heavy duty pneumatic tire (2) according to claim 3, wherein the first projections (28) bend in a direction that is the same as a direction in which the zigzag circumferential groove (10, 12, 12c, 12ca, 12cb, 12s, 12sa, 12sb) bends.

5. The heavy duty pneumatic tire (2) according to any one of claims 1 to 4, wherein the first projections (28) are longer than the second projections (30).

6. The heavy duty pneumatic tire (2) according to any one of claims 1 to 5, wherein the first projections (28) and the second projections (30) are alternately arranged in the circumferential groove (10, 12, 12c, 12ca, 12cb, 12s, 12sa, 12sb).

7. The heavy duty pneumatic tire (2) according to any one of claims 1 to 6, wherein a depth from an outer surface of the tread (4) to each first projection (28) is smaller than a depth of the lateral groove (10, 18).

## Patentansprüche

1. Schwerlast-Luftreifen (2), der eine Lauffläche (4) umfasst, die mit einer Straßenoberfläche in Kontakt kommt, wobei
die Lauffläche (4) mindestens drei Landabschnitte (8, 8c, 8m, 8s) aufweist, die sich in einer Umfangsrichtung erstrecken, und eine Umfangsrille (10, 12, 12c, 12ca, 12cb, 12s, 12sa, 12sb) zwischen einem Landabschnitt (8, 8c, 8m, 8s) und einem anderen Landabschnitt (8, 8c, 8m, 8s), der benachbart zu dem einen Landabschnitt (8, 8c, 8m, 8s) angeordnet ist, vorhanden ist,
der Landabschnitt (8, 8c, 8m, 8s) eine große Anzahl von Blöcken (14) umfasst, die in der Umfangsrichtung ausgerichtet sind, und eine Querrille (10, 18) zwischen einem Block (14) und einem anderen Block (14), der benachbart zu dem einen Block (14) angeordnet ist, vorhanden ist,
die Umfangsrille (10, 12, 12c, 12ca, 12cb, 12s, 12sa, 12sb) eine große Anzahl von Vorsprüngen (26) aufweist, die von einer Bodenfläche der Umfangsrille (10, 12, 12c, 12ca, 12cb, 12s, 12sa, 12sb) vorstehen,
die Vorsprünge (26) erste Vorsprünge (28) und zweite Vorsprünge (30) umfassen,
die zweiten Vorsprünge (30) ein kleineres Volumen als die ersten Vorsprünge (28) haben,
die Querrille (10, 18) mit der Umfangsrille (10, 12, 12c, 12ca, 12cb, 12s, 12sa, 12sb) verbunden ist, und jeder erste Vorsprung (28) an einer Position angeordnet ist, an der die Querrille (10, 18) mit der Umfangsrille (10, 12, 12c, 12ca, 12cb, 12s, 12sa, 12sb) verbunden ist, und,
in der Umfangsrichtung, eine Öffnung der Querrille (10, 18) zwischen einem Ende (B1) des ersten Vorsprungs (28) und einem anderen Ende (B2) des ersten Vorsprungs (28) angeordnet ist,
**dadurch gekennzeichnet, dass** die ersten Vorsprünge (28) höher sind als die zweiten Vorsprünge (30).

2. Schwerlast-Luftreifen (2) nach Anspruch 1, wobei die Umfangsrille (10, 12, 12c, 12ca, 12cb, 12s, 12sa, 12sb) eine Zickzack-Umfangsrille (10, 12, 12c, 12ca, 12cb, 12s, 12sa, 12sb) ist, die sich zickzackförmig erstreckt.

3. Schwerlast-Luftreifen (2) nach Anspruch 2, wobei die Querrille (10, 18) mit der Zickzack-Umfangsrille (10, 12, 12c, 12ca, 12cb, 12s, 12sa, 12sb) an einer Außenseite der Biegung der Zickzack-Umfangsrille (10, 12, 12c, 12ca, 12cb, 12s, 12sa, 12sb) verbunden ist.

4. Schwerlast-Luftreifen (2) nach Anspruch 3, wobei sich die ersten Vorsprünge (28) in eine Richtung biegen, die gleich ist wie die Richtung, in die sich die Zickzack-Umfangsrille (10, 12, 12c, 12ca, 12cb, 12s, 12sa, 12sb) biegt.

5. Schwerlast-Luftreifen (2) nach einem der Ansprüche 1 bis 4, wobei die ersten Vorsprünge (28) länger sind als die zweiten Vorsprünge (30).

6. Schwerlast-Luftreifen (2) nach einem der Ansprüche 1 bis 5, wobei die ersten Vorsprünge (28) und die zweiten Vorsprünge (30) abwechselnd in der Umfangsrille (10, 12, 12c, 12ca, 12cb, 12s, 12sa, 12sb) angeordnet sind.

7. Schwerlast-Luftreifen (2) nach einem der Ansprüche 1 bis 6, wobei eine Tiefe von einer Außenfläche der Lauffläche (4) zu jedem ersten Vorsprung (28) kleiner ist als eine Tiefe der Querrille (10,

## Revendications

1. Bandage pneumatique pour service intensif (2) comprenant une bande de roulement (4) qui vient en contact avec une surface routière, dans lequel
la bande de roulement (4) inclut au moins trois portions en relief (8 ,8c, 8m, 8s) s'étendant dans une direction circonférentielle, et une rainure circonférentielle (10, 12, 12c, 12ca, 12cb, 12s, 12sa,12sb) est présente entre une portion en relief (8 ,8c, 8m, 8s) et une autre portion en relief (8 ,8c, 8m, 8s) située de manière adjacente à ladite une portion en relief (8 ,8c, 8m, 8s), la portion en relief (8 ,8c, 8m, 8s) inclut un grand nombre de blocs (14) alignés dans la direction circonférentielle, une rainure latérale (10, 18) est présente entre un bloc (14) et un autre bloc (14) situé de manière adjacente audit un bloc (14),
la rainure circonférentielle (10, 12, 12c, 12ca, 12cb, 12s, 12sa,12sb) inclut un grand nombre de projections (26) se projetant depuis une surface de fond de la rainure circonférentielle (10, 12, 12c, 12ca, 12cb, 12s, 12sa,12sb),
les projections (26) incluent des premières projections (28) et des secondes projections (30),
les secondes projections (30) ont des volumes plus petits que ceux des premières projections (28),
la rainure latérale (10, 18) est connectée à la rainure circonférentielle (10, 12, 12c, 12ca, 12cb, 12s, 12sa,12sb), et chaque première projection (28) est située à une position où la rainure latérale (10, 18) est connectée à la rainure circonférentielle (10, 12, 12c, 12ca, 12cb, 12s, 12sa,12sb), et,
dans la direction circonférentielle, une ouverture de la rainure latérale (10, 18) est située entre une extrémité (B1) de la première projection (28) et une autre extrémité (B2) de la première projection (28),
**caractérisé en ce que**
les premières projections (28) sont plus grandes que les secondes projections (30).

2. Bandage pneumatique pour service intensif (2) selon la revendication 1, dans lequel la rainure circonférentielle (10, 12, 12c, 12ca, 12cb, 12s, 12sa,12sb) est une rainure circonférentielle en zigzag (10, 12, 12c, 12ca, 12cb, 12s, 12sa,12sb) s'étendant d'une manière en zigzag.

3. Bandage pneumatique pour service intensif (2) selon la revendication 2, dans lequel la rainure latérale (10, 18) est connectée à la rainure circonférentielle en zigzag (10, 12, 12c, 12ca, 12cb, 12s, 12sa,12sb) au niveau d'un côté extérieur d'une flexion de la rainure circonférentielle en zigzag (10, 12, 12c, 12ca, 12cb, 12s, 12sa,12sb).

4. Bandage pneumatique pour service intensif (2) selon la revendication 3, dans lequel les premières projections (28) fléchissent dans une direction qui est la même qu'une direction dans laquelle la rainure circonférentielle en zigzag (10, 12, 12c, 12ca, 12cb, 12s, 12sa,12sb) fléchit.

5. Bandage pneumatique pour service intensif (2) selon l'une quelconque des revendications 1 à 4, dans lequel les premières projections (28) sont plus longues que les secondes projections (30).

6. Bandage pneumatique pour service intensif (2) selon l'une quelconque des revendications 1 à 5, dans lequel les premières projections (28) et les secondes projections (30) sont agencées en alternance dans la rainure circonférentielle (10, 12, 12c, 12ca, 12cb, 12s, 12sa,12sb).

7. Bandage pneumatique pour service intensif (2) selon l'une quelconque des revendications 1 à 6, dans lequel une profondeur depuis une surface extérieure de la bande de roulement (4) jusqu'à chaque première projection (28) est plus petite qu'une profondeur de la rainure latérale (10, 18).
